# EUROPÄISCHE PATENTSCHRIFT

(11) **EP 2 028 395 B1**
(45) Veröffentlichungstag und Bekanntmachung des Hinweises auf die Patenterteilung: **24.11.2010**
(21) Anmeldenummer: 08161243.4
(22) Anmeldetag: 28.07.2008
(51) Int. Cl.: F16H 59/10, F16H 63/42

(54) **Verfahren zur Vermeidung einer unbeabsichtigten Positionsschaltung aus einer nicht kraftschlüssigen Position bei einem Getriebe**
Method for avoiding unintentional position switching from a non-positive position in a gearbox
Procédé destiné à empêcher une commutation de position imprévue à partir d'une position en liaison de force dans un engrenage

(30) Priorität: 24.08.2007 DE 102007040039
(43) Veröffentlichungstag der Anmeldung: 25.02.2009
(73) Patentinhaber: ZF Friedrichshafen AG, 88038 Friedrichshafen (DE)
(72) Erfinder: Horneffer, Franz, 88074 Meckenbeuren (DE); Zänglein, Bernd, 88212 Ravensburg (DE); Klein, Stéphane, 88046 Friedrichshafen (DE)

(56) Entgegenhaltungen:
- DE-A1- 10 005 328
- DE-A1-102007 005 400
- US-A1- 2005 126 322

## Beschreibung

Die vorliegend Erfindung bezieht sich auf ein Verfahren zur Vermeidung einer unbeabsichtigten Positionsschaltung aus einer nicht kraftschlüssigen Position bei einem Getriebe umfassend eine elektrische bzw. elektronische Schaltungsbetätigung und eine rastierende Schalt- bzw. Wähleinrichtung, gemäß dem Oberbegriff des Patentanspruchs 1.

Aus dem Stand der Technik sind Automatgetriebe für Kraftfahrzeuge bekannt, welche eine elektrische bzw. elektronische Schaltungsbetätigung ("shift by wire") aufweisen, wobei zwischen der Schalt- bzw. Wähleinrichtung und dem Getriebe keine mechanische Kopplung vorhanden ist. Hierbei werden die über eine üblicherweise als Schritt- oder Drehschalter ausgebildete rastierende Schalt- bzw. Wähleinrichtung eingegebenen Fahrerwünsche über eine zwischen der Schalt- bzw. Wähleinrichtung und dem Automatgetriebe geschaltete elektrische bzw. elektronische Schnittstelle an das Getriebe bzw. an die Getriebesteuerung übermittelt, wo der Schaltvorgang über Aktuatoren beispielsweise hydraulisch oder elektrisch umgesetzt wird.

Die Merkmale des Oberbegriffs des Patentanspruchs 1 sind aus der gattungsbildenden DE 10 005 382 bekannt.

Aus der noch nicht veröffentlichten DE 10 2007 005 400 der Anmelderin geht ein Verfahren zum Betreiben eines zumindest ein eine elektrische Schaltungsbetätigung aufweisendes Automatgetriebe und ein Antriebsaggregat umfassenden Antriebsstrangs eines Kraftfahrzeugs hervor. Hierbei werden einer Rastenscheibe des Automatgetriebes, an einem Schaltungswählhebel, welcher rastierende bzw. stabile Wählhebelpositionen (P, R, N, D) aufweist, eingegebenen Fahrerwünsche über eine zwischen den Schaltungswählhebel und das Automatgetriebe geschaltete, elektrische bzw. elektronische Schnittstelle derart übermittelt, dass die Rastenscheibe eine von der Betätigung des Schaltwählhebels abhängige Position einnimmt.

Gemäß dem bekannten Verfahren wird ein Fahrerwunsch, auf Basis dessen eine Getriebesteuerungseinrichtung die Funktion des Automatgetriebes steuert bzw. regelt, an der Rastenscheibe des Automatgetriebes mit Hilfe eines Positionssensors des Automatgetriebes ermittelt, der vorzugsweise als digitaler Positionssensor ausgebildet ist.

Bei einer Positionsschaltung in einem Automatgetriebe aus einer nicht kraftschlüssigen Position, d.h. aus der Position P oder der Position N, mittels einer rastierende Schalt- bzw. Wähleinrichtung, können Situationen auftreten, in denen die Schalt- bzw. Wähleinrichtung, die in der Regel als Schritt- oder Drehschalter ausgebildet ist, in einer instabilen Mittelposition (Scheitelpunkt) zwischen zwei rastierende bzw. stabilen Positionen stehen bleibt.

In dieser Mittelposition wird nach dem Stand der Technik die Positionsanzeige dunkel geschaltet, wobei im Getriebe, je nach Bewegungsrichtung der Betätigung, die vorherige Position beibehalten oder der Kraftschluss unterbrochen wird.

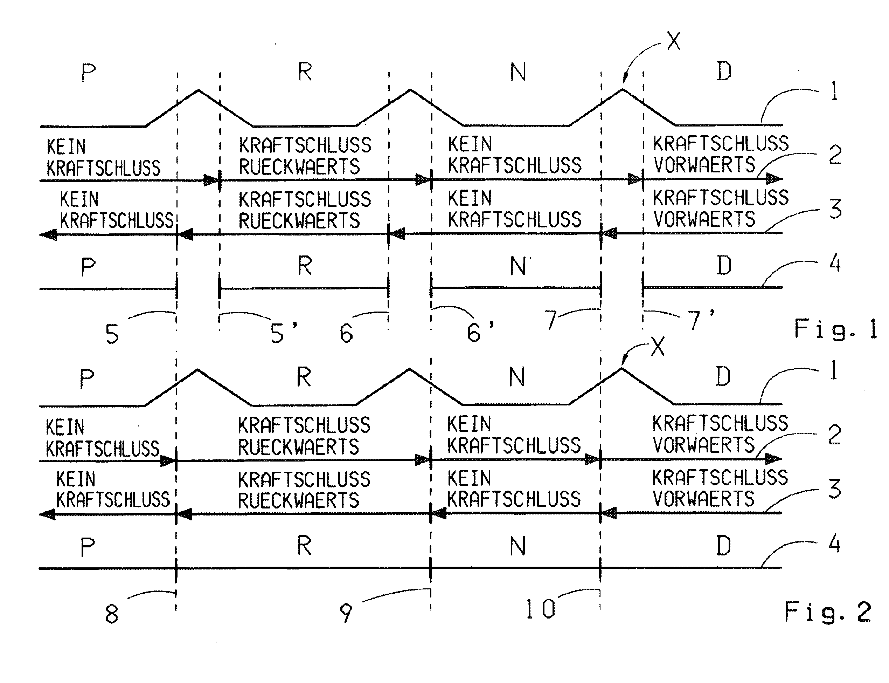

Wenn sich bei einer derartigen Situation die rastierende Schalt- bzw. Wähleinrichtung unerwartet, beispielsweise durch eine Erschütterung oder bei einem vorzeitigen Loslassen der Schalt- bzw. Wähleinrichtung, selbsttätig in eine Fahrposition bewegt, kann dies zu einer unerwarteten und für den Fahrer überraschenden Fahrzeugbewegung führen. Dieses Problem wird später noch anhand Figur 1 näher erklärt.

Der vorliegenden Erfindung liegt die Aufgabe zugrunde, ein Verfahren zur Vermeidung einer unbeabsichtigten Positionsschaltung aus einer nicht kraftschlüssigen Position bei einem Getriebe umfassend eine elektrische bzw. elektronische Schaltungsbetätigung und eine basierende Schalt- bzw. Wähleinrichtung anzugeben, durch dessen Durchführung die erwähnten, aus dem Stand der Technik bekannten Nachteile vermieden werden.

Diese Aufgabe wird durch die Merkmale des Patentanspruchs 1 gelöst. Weitere erfindungsgemäße Ausgestaltungen und Vorteile gehen aus den Unteransprüchen und der nachfolgenden Beschreibung hervor.

Demnach wird bei einer Positionsschaltung aus einer nicht kraftschlüssigen Position vorgeschlagen, spätestens dann, wenn die rastierende Schalt- bzw. Wähleinrichtung einen Bereich erreicht hat, bei dem sie in Selbsthemmung stehen bleiben kann, die von der elektrischen bzw. elektronischen Schaltungsbetätigung erkannte gewünschte kraftschlüssige Position auszugeben, dem Fahrer, beispielsweise über die Positionsanzeige, kenntlich zu machen, und im Getriebe auch umzusetzen.

Die genannte Selbsthemmung tritt üblicherweise im Bereich der Mittellage bzw. des Scheitelpunktes zwischen zwei Schaltpositionen der Schalt- bzw. Wähleinrichtung auf.

Hierbei wird im Rahmen einer ersten Ausführungsform der Erfindung von der elektrischen bzw. elektronischen Schaltungsbetätigung der einer kraftschlüssigen Position entsprechende erkannte Fahrerwunsch spätestens beim Erreichen der Mittelposition zwischen einer nicht kraftschlüssigen und einer kraftschlüssigen Position ausgegeben und dem Fahrer kenntlich gemacht, wobei im Getriebe entsprechend dieser Position geschaltet wird.

Durch diese Vorgehensweise weiß der Fahrer, dass die von ihm gewünschte kraftschlüssige Position geschaltet ist. Wenn in einer derartigen Situation die Schalt- bzw. Wähleinrichtung aus der Mittelposition in die kraftschlüssige Position springt, resultiert dies in vorteilhafter Weise nicht in einer überraschenden Schaltung; für den Fall, dass die Schalt- bzw. Wähleinrichtung in die nicht kraftschlüssige Position zurückspringt, wird im Getriebe der Kraffschluss unterbrochen, wodurch keine unerwartete Fahrzeugbewegung entstehen kann.

Gemäß einer weiteren Ausgestaltung der Erfindung wird die Anzeige der kraftschlüssigen Position bereits dann ausgegeben und im Getriebe entsprechend geschaltet, sobald der Fahrerwunsch von der elektrischen bzw. elektronischen Schaltungsbetätigung vor Erreichen der Mittelposition erkannt wird.

Im Rahmen einer Weiterbildung der Erfindung wird vorgeschlagen, durch eine Modellierung der rastierenden Schalt- bzw. Wähleinrichtung und unter Berücksichtigung der mechanischen Toleranzen sowie der Toleranzen in den Signalen der elektrischen bzw. elektronischen Schaltungsbetätigung die Bereiche zu ermitteln, in denen die basierende Schalt- bzw. Zähleinrichtung stehen bleiben kann und spätestens dann, wenn die basierende Schalt- bzw. Wähleinrichtung einen dieser Bereiche erreicht, die kraftschlüssige Position auszugeben, dem Fahrer anzuzeigen und im Getriebe umzusetzen.

Erfindungsgemäß ist vorgesehen, dass die elektrische bzw. elektronische Schaltungsbetätigung derart ausgelegt ist, dass der Fahrerwunsch vor Erreichen der Mittelposition bzw. vor Erreichen der kritischen Bereiche erkannt wird.

Die Erfindung wird im folgenden anhand der beigefügten Figuren beispielhaft näher erläutert. Es zeigen:
- Figur 1:: Ein Diagramm zur Veranschaulichung der Vorgehensweise bei Positionsschaltungen in einem Getriebe umfassend eine elektrische bzw. elektronische Schaltungsbetätigung und eine rastierende Schalt- bzw. Wähleinrichtung nach dem Stand der Technik und
- Figur 2:: Ein Diagramm zur Veranschaulichung des erfindungsgemäßen Verfahrens.

In Figuren 1 und 2 stellt Kurve 1 die an einer rastierende Schalt- bzw. Wähleinrichtung, beispielsweise an einem Drehschalter, vom Fahrer aufzubringende bzw. systembedingt wirkende Kraft dar, wobei als stabile Positionen die Positionen P, R, N und D eines Automatgetriebes gezeigt werden. Die Kurve 2 unterhalb der Positionen P, R, N, D verdeutlicht die jeweils tatsächlich im Getriebe umgesetzte Fahrposition bei einer Betätigung der Schalt- bzw. Wähleinrichtung entsprechend der angegebenen Bewegungsrichtung bei einer Schaltung von P nach R, von R nach N und von N nach D. Analog dazu verdeutlicht die Kurve 3 die jeweils im Getriebe umgesetzte Fahrposition bei einer Schaltung von D nach N, von N nach R und von R nach P.

Wie durch Kurve 4 verdeutlicht, wird in dem in Figur 1 dargestellten System gemäß dem Stand der Technik bei einer Schaltung von D nach N, N nach R und R nach P ebenso wie bei einer Schaltung N nach D, R nach N und P nach R stets dann die Positionsanzeige dunkel geschaltet, solange sich die Schalt- bzw. Zähleinrichtung in den Bereichen zwischen den gestrichelten Linien 5 und 5', 6 und 6' bzw. 7 und 7' befindet. Hierdurch soll sichergestellt werden, dass der Fahrer keine irreführenden oder sogar falschen Informationen über den Zustand des Getriebes erhält. Diese Bereiche zwischen den gestrichelten Linien 5, 5' und 6, 6' und 7, 7' markieren die Scheitelpunkte der Positionswechsel, einen Bereich, in den die Schalt- oder Wähleinrichtung mechanisch in eine Selbsthemmung kommt oder kommen kann.

Das erfindungsgemäße Verfahren wird im folgenden anhand einer Positionsschaltung von N nach Erläutert.

Bezug nehmend auf Figur 1 wird nach dem Stand der Technik zum Schalten seitens des Fahrers eine Kraft benötigt, die ansteigt, wobei ab einem bestimmten Punkt X, dem Scheitelpunkt, die Schalt- bzw. Wähleinrichtung in Richtung D springen soll, da auf diese eine systembedingte Kraft wirkt (dies wird durch die negative Steigung der Kurve A ab diesem Punkt verdeutlicht); vor diesem Punkt springt die Schalt- bzw. Wähleinrichtung beim Loslassen selbsttätig in die Ausgangsposition zurück.

Aufgrund von Reibungseffekten und Toleranzen ist in der Praxis anstelle des Scheitelpunktes eine leicht gekrümmte Kurve anzunehmen, so dass die Schalt- bzw. Wähleinrichtung in einer Mittelposition innerhalb dieses kritischen Bereiches, der der gekrümmte Kurve entspricht, stehen bleiben kann (Selbsthemmung). Wie aus Figur 1 ersichtlich, befindet sich diese Mittelposition bzw. der kritische Bereich für eine Schaltung von N nach D im Bereich zwischen den Linien 7, 7', so dass die Position N beibehalten wird und die Positionsanzeige dunkel geschaltet wird. Wie bereits erläutert, kann durch eine äußere Einwirkung, beispielsweise durch Schließen einer Fahrzeugtür, die Schalt- bzw. Wähleinrichtung aus dieser Selbsthemmung in Richtung D springen, wodurch die Position D unerwünschter Weise geschaltet wird.

Um dies zu vermeiden, wird erfindungsgemäß vorgeschlagen, spätestens dann, wenn die rastierende Schalt- bzw. Wähleinrichtung in den Bereich der Selbsthemmung kommt, die kraftschlüssige Position an der Positionsanzeige auszugeben und im Getriebe auch umzusetzen. Voraussetzung hierfür ist, dass der Fahrerwunsch von der Elektronik bereits erkannt ist. Zu diesem Zweck wird die elektrische bzw. elektronische Schaltungsbetätigung derart ausgelegt, dass der Fahrerwunsch vor Erreichen der Mittelposition bzw. vor Erreichen der kritischen Bereiche erkannt wird.

Diese Position wird in Figur 2 für die Positionsschaltung von N nach D durch die gestrichelte Linie 10 definiert; sie befindet sich im vorliegenden Beispiel, in Bewegungsrichtung der Schalt- oder Wähleinrichtung gesehen, vor dem Scheitelpunkt X, wobei sie alternativ mit diesem übereinstimmen kann.

Analog dazu sind in Figur 2 für die Positionsschaltungen von P nach R und von R nach N die gestricheiten Linien 8 und 9 eingezeichnet, welche jeweils den Übergang von einer Fahrposition in die andere markiert.

Gemäß der Erfindung wird bei der Betätigung der Schalt- bzw. Wähleinrichtung zur Durchführung einer Positionsschaltung die Positionsanzeige im Unterschied zum Stand der Technik nicht dunkel geschaltet, der Fahrer hat an der Positionsanzeige also stets eine gültige Anzeige, die auch immer der tatsächlich im Getriebe eingelegten Fahrposition entspricht.

Durch die erfindungsgemäße Konzeption wird eine Absicherung einer rastierende Schalt- bzw. Wähleinrichtung gewährleistet, derart, dass eine für den Fahrer unerwartete Positionsschaltung aus einer nicht kraftschlüssigen Position vermieden wird. Bei einer Positionsschaltung von einer nicht kraftschlüssigen in eine kraftschlüssige Fahrposition wird also stets bereits kurz vor dem Scheitelpunkt der Bewegung der Schalt- bzw. Wähleinrichtung die von dem Fahrer gewünschte Fahrposition im Getriebe geschaltet und dies auch an der Positionsanzeige (Display) angezeigt. Wenn also der Fahrer die Schalt- bzw. Wähleinrichtung kurz vor dem Scheitelpunkt losläßt, springt diese Schalt- bzw. Wähleinrichtung zurück in eine kraftschlußfreie Fahrposition, was einen wesentlichen Sicherheitsaspekt darstellt.

Wenn der Fahrer die Schalt- bzw. Wähleinrichtung im Scheitelpunkt losläßt, kann die Schalt- bzw. Wähleinrichtung in beide Fahrpositionen, also die kraftschlußfreie und die kraftschlüssige Fahrposition, springen. Im unterschied zum Stand der Technik wird der Fahrer bei einem Sprung in die kraftschlüssige Fahrposition nicht überrascht, da er über die Positionsanzeige hierüber bereits informiert ist.

## Patentansprüche

1. Verfahren zur Vermeidung einer unbeabsichtigten Positionsschaltung aus einer nicht kraftschlüssigen Position (N, P) bei einem Getriebe umfassend eine elektrische bzw. elektronische Schaltungsbetätigung und eine rastierende Schalt- bzw. Wähleinrichtung, **dadurch gekennzeichnet, dass** bei einer Positionsschaltung aus einer nicht kraftschlüssigen Position (N, P) spätestens dann, wenn die rastierende Schalt- bzw. Wähleinrichtung einen Bereich (10, 9, 8) der Mittellage zwischen zwei Schaltpositionen erreicht hat, bei dem sie in Selbsthemmung stehen bleiben kann, die von der elektrischen bzw. elektronischen Schaltungsbetätigung erkannte gewünschte kraftschlüssige Position (D, R) ausgegeben und dem Fahrer über eine Positionsanzeige angezeigt wird, wobei diese Position (D, R) im Getriebe umgesetzt wird.

2. Verfahren nach Anspruch 1, **dadurch gekennzeichnet, dass** der einer kraftschlüssigen Position (D, R) entsprechende erkannte Fahrerwunsch von der elektrischen bzw. elektronischen Schaltungsbetätigung spätestens beim Erreichen einer Mittelposition (X) zwischen einer nicht kraftschlüssigen Position (N, P) und einer kraftschlüssigen Position (D, R) ausgegeben und dem Fahrer kenntlich gemacht wird, wobei im Getriebe entsprechend dieser Position (D, R) geschaltet wird.

3. Verfahren nach Anspruch 1 oder 2, **dadurch gekennzeichnet, dass** die Anzeige der kraftschlüssigen Position (D, R) bereits dann ausgegeben und im Getriebe entsprechend geschaltet wird, sobald der Fahrerwunsch von der elektrischen bzw. elektronischen Schaltungsbetätigung vor Erreichen der Mittelposition (X) erkannt wird.

## Claims

1. Method for avoiding unintentional position shifting from a non-frictionally-engaging position (N, P) in a transmission comprising an electrical or electronic shifting activation means and a latching shift device or selector device, **characterized in that** in the case of shifting of position from a non-frictionally-engaging position (N, P) the desired frictionally engaging position (D, R), which has been detected by the electrical or electronic shifting activation means, is output at the latest when the latching shift device or selector device has reached a region (10, 9, 8) of the central position between two shift positions in which it can remain in a self-locking fashion, and said desired frictionally engaging position (D, R) is indicated to the driver via a position display, herein this position (D, R) is implemented in the transmission.

2. Method according to Claim 1, **characterized in that** the detected driver's request, corresponding to a frictionally engaging position (D, R), is output by the electrical or electronic shifting activation means at the latest when a central position (X) between a non-frictionally-engaging position (N, P) and a frictionally engaging position (D, R) is reached, and is communicated to the driver, wherein the transmission is shifted in accordance with this position (D, R).

3. Method according to Claim 1 or 2, **characterized in that** the display of the frictionally engaging position (D, R) is already output, and the transmission is correspondingly shifted, as soon as the driver's request is detected by the electrical or electronic shifting activation means, before the central position (X) is reached.

## Revendications

1. Procédé destiné à éviter un changement de position indésirable d'une position ne se trouvant pas en liaison de force (N, P) dans une transmission, comprenant une commande de commutation électrique ou électronique et un dispositif de commutation ou de sélection par enclenchement, **caractérisé en ce que** dans le cas d'un changement de position d'une position ne se trouvant pas en liaison de force (N, P), au plus tard lorsque le dispositif de commutation ou de sélection par enclenchement a atteint une région (10, 9, 8) de situation centrale entre deux positions de commutation, dans laquelle il peut rester en autoblocage, la position de liaison par force (D, R) souhaitée reconnue par la commande de commutation électrique ou électronique est délivrée et est indiquée au conducteur par le biais d'un affichage de position, cette position (D, R) étant sélectionnée dans la transmission.

2. Procédé selon la revendication 1, **caractérisé en ce que** le souhait du conducteur détecté et correspondant à une position en liaison de force (D, R) est délivré par la commande de commutation électrique ou électronique au plus tard lorsqu'une position centrale (X) est atteinte entre une position non en liaison de force (N, P) et une position en liaison de force (D, R), et le conducteur en est averti, cette position (D, R) étant enclenchée de manière correspondante dans la transmission.

3. Procédé selon la revendication 1 ou 2, **caractérisé en ce que** l'affichage de la position en liaison de force (D, R) est déjà délivrée et enclenchée de manière correspondante dans la transmission, dès que le souhait du conducteur est détecté par la commande de commutation électrique ou électronique avant d'atteindre la position centrale (X).
